# EUROPEAN PATENT APPLICATION

(11) **EP 4 435 062 A1**
(43) Date of publication of application: **25.09.2024**
(21) Application number: 23163133.4
(22) Date of filing: 21.03.2023
(51) Int. Cl.: C09D 5/00, B29B 17/02, C09D 7/61, C09D 7/65, C09D 175/04

(54) **PRIMER COMPOSITION FOR DELAMINATION AND/OR DEINKING**

(71) Applicant: Siegwerk Druckfarben AG & Co. KGaA, 53721 Siegburg (DE)
(72) Inventor: Kulawig, Andreas, 53757 Sankt Augustin (DE); Hoffmann, Martin, 50321 Brühl (DE); Leineweber, Ralf, 53721 Siegburg (DE)
(74) Representative: Hepp Wenger Ryffel AG

(57) **Abstract**

The present invention is related to a primer composition for delaminating and/or deinking of a substrate (2, 2'), wherein said primer composition comprises one or more solvents, as a first binder component a modified rosin resin selected from the group consisting of maleic-modified an fumarate-modified rosin resin having an acid value in the range from 50 to 300 mg KOH/g and being dispersible in an alkaline medium, a film-forming polyurethane and optionally a water dispersible acrylic resin. The present invention is furthermore related to a laminated product (1) comprising two substrate layers (2, 2'), and a primer layer (3) made from the primer composition of the invention applied to at least one surface of one of said substrate layers (2), as well as to an article comprising said laminated product (1).

## Description

The present invention is related to the delamination and/or deinking of substrates, such as flexible packaging articles.

Due to increasing environmental concerns, the conventional approach of throwing away articles after use has to be replaced by approaches involving the recycling of the articles or materials making up those articles.

This applies especially to plastic articles. Articles made of plastic (i.e. synthetic polymers such as polyethylene (PE), polypropylene (PP) or polyethylene terephthalate (PET)) are extremely efficient for the purposes of flexible packaging. However, this advantage has led to an extreme use of plastic materials, and without efficient recycling the environmental pollution that can already be observed (e.g. pollution of the oceans) will increase. This includes increase health hazards due to micro-plastic waste entering into the environment. Moreover, the plastic waste is landfilled with the high risk of leaking into nature.

Unrecycled plastic material is currently largely incinerated, which is detrimental with respect to the amount of CO₂ released therewith and its contribution to global warming.

In some regions (e.g. the EU) regulations have been implemented requiring a certain recycling rate to be obtained until a certain point in time. Furthermore and independent from regulations, all major brand owners made commitments to increase the amount of recycled material in their products.

Accordingly, there is a need for efficient recycling concepts for plastic material.

With respect to printed articles, this imposes additional requirements. The recyclability of material and quality of recycled material should not be impaired by the printing inks applied thereupon. Extremely critical in this respect is the extrusion step during recycling where the material is processed at higher temperatures resulting in a deterioration of the recycled product quality due to the limited heat resistance of binders and/or pigments present in the printing ink layer. Furthermore, caused by the pigment in the printed layer, the recycled material is coloured and not transparent, which limits the area of application.

Accordingly, before recycling of laminated plastic articles such as flexible packaging products, it is necessary to delaminate the product and subsequently remove any ink layers and additional functional layers.

In US-2015/0 298 360 A1, a method for removing ink printed on a plastic film is described, wherein a printed material is first conditioned in a plunger in order to obtain a film free of impurities, and subsequently said film is ground and subjected to cleaning and washing steps using a cleaning system with a cleaning solution consisting of surfactants in water at basic pH. The method states to allow recovery of the cleaned film, the cleaning solution as well as of the pigments of the ink layer that was applied onto the film. While this method may be suitable on a lab scale, it is difficult to implement in an upscaled commercial process. Also, no delamination step is described.

In JP-2001/131484, a plastic film was described from which printed matters can be easily released and removed by a treatment with an aqueous solution when recycled, due to the provision of a releasing layer on its surface, on which releasing layer a printed matter is formed. The releasing layer is made of a material which becomes water-swellable or water-soluble by at least a neutralization treatment. The releasing layer comprises a releasing component which is a polymer or a copolymer containing 10-60 wt.% of a carboxylic group in the molecule. During the neutralisation treatment, the carboxylic groups of said component are converted into the respective carboxylate groups, which renders the releasing layer water soluble.

However, such releasing layers do not meet the requirement imposed on commercial plastic articles such as flexible packagings. In particular, they do not exhibit the necessary water sensitivity, so that on the one hand they are sufficiently water-resistant under normal conditions of use, but on the other hand dissolve sufficiently quickly (in less than 15 minutes) and to such an extent that the substrate from which the layer is released is sufficiently pure. Another aspect is the poor overprintability of such layers, resulting in problems like pinholes and unacceptable print quality. Furthermore, such releasing layers cannot be used in laminates, since the bond strength values required for lamination are not achievable with those layers.

In EP-3 932 642 A1, a primer composition for delaminating and/or deinking of a substrate is described, wherein said primer composition comprises as a first binder component a component that has a polymeric backbone with pendent hydroxy and/or carboxy groups that have been esterified or acetalised or ketalised to such an extent that the first binder component has an acid value of 0 - 50 mg KOH/g or a hydroxyl value of 0 - 600 mg KOH/g, preferably 0 - 400 mg KOH/g, and as a modifying component a compound selected from the group consisting of a soft resin, a plasticizer, or combinations thereof, so that a primer layer prepared from said primer composition is dissolvable in an alkaline aqueous medium.

This primer composition provides for good delamination and deinking of PET/PE laminate structures, i.e. laminates whose substrates are made of either Polyethylenterephthalate (PET) or polyethylene (PE).

However, for some demanding substrates such as polypropylene (PP), the primer composition of EP-3 932 642 A1 is not optimal, due to the obtainable bond strength values (BSV) and deinking/delamination times on such substrates. Thus, the field of application of the primer composition of EP-3 932 642 A1 is restricted.

It was the problem of the present invention to provide a primer composition for delamination and/or deinking of laminated packaging structures with a broader field of application, in particular with very good delamination and/or deinking properties on demanding substrates such as polypropylene.

The above problem is solved by the present invention.

In detail, the present invention is related to a primer composition for delaminating and/or deinking of a substrate, wherein said primer composition is solvent-based and comprises as a first binder component a modified rosin resin selected from the group consisting of maleic-modified an fumarate-modified rosin resin having an acid value in the range from 50 to 300 mg KOH/g and being dispersible in an alkaline medium, and a film-forming polyurethane.

The present invention is especially related to laminates, i.e. laminated products. According to the present invention, the term "laminate" refers to a product that consists of a stack of layers, wherein one layer (an outermost layer or a core layer) is defined as substrate or substrate layer. For example, the substrate layer may be a plastic layer, preferably a transparent plastic layer. A laminate may also preferably comprise more than one of those substrate layers, most preferably as outermost layers, and in between these substrate layers there may be provided a printed layer or several printed layers. These intermediate printed layers are protected from environmental influences.

In such a laminate, the one or more printed layers are typically connected to a substrate layer via a primer layer and/or an adhesive layer. As opposed to overprint varnish layers which are applied onto the surface of a substrate layer, a primer layer and/or an adhesive layer in a laminate has to meet specific requirements with respect to adhesion, reduced brittleness (i.e. increased flexibility) and especially has to achieve a high bond strength value.

The terms "primer composition" and "primer layer" are known in the art and refer to a composition or layer made therefrom which is applied onto a surface of a substrate in order to provide said surface with the required properties for applying a printing layer thereupon. These required properties comprise, for example, good adhesion properties, so that the printing ink layer applied thereupon does not detach during normal operation conditions.

In accordance with the present invention, the primer composition is a specific primer composition that renders a primer layer made therefrom suitable for use in a laminate, i.e. it has good adhesion properties, reduced brittleness, and in particular high bond strength values can be achieved. Moreover, according to the present invention the specific primer composition renders a primer layer made therefrom suitable for delamination and/or deinking. This involves characteristics such as very good solubility or dispersibility in an alkaline aqueous medium in combination with very good overprintability and water resistance.

The primer composition according to the present invention consists of at least one binder component (here designated as first binder component), a film-forming polyurethane, one or more solvents, and optionally additional components such as an additional binder, and optionally additives such as a plasticizer, and an anti-blocking agent. The primer composition according to the present invention does not comprise any colorant.

According to the present invention, said primer composition comprises as a first binder component a water-dispersible modified rosin resin selected from the group consisting of maleic-modified and fumarate-modified rosin resin.

Rosin resins and their preparations are known in the art. Reference may be made to Leach/Pierce (Eds.), the Printing Ink Manual, Blueprint, 5th ed. 1993, p. 219-223. In said textbook, also maleic-modified and fumarate-modified rosin resins are described. Those resins may be manufactured by a Diels-Alder reaction between maleic anhydride or fumaric acid and rosin resin.

Maleic-modified and fumarate-modified rosin resins may be preferably used in esterified form. Maleic-modified and fumarate-modified rosin resin esters are commercially available, for example under the trade name Hydro-Rez from Lawter.

According to the present invention, any water-dispersible maleic-modified and fumarate-modified rosin resin may be used. The maleic-modified and fumarate-modified rosin resin to be used according to the present invention has an acid value of an acid value in the range from 50 to 300 mg KOH/g, more preferably 150-250 mg KOH/g.

The acid value is a known parameter that defines the number of free carboxylic acid groups in a chemical compound. It is typically determined by a titration of the substance to be examined with KOH. The amount of KOH (in mg) required for neutralisation of 1g of the substance to be examined is the acid value.

The first binder component contributes to the solubility and the bond strength value (BSV) of the primer composition of the present invention.

The primer composition according to the present invention furthermore comprises a film-forming polyurethane.

A film-forming polyurethane is a polyurethane capable of forming a film upon application to a solid surface. Film formation typically requires good wetting of the surface to be protected, firm binding of any particles in the film; rapid drying into a thin layer (from a few minutes to 24 h at 15°-200°C), with formation of strong moisture- and gas-resistant films that can withstand prolonged action of the external medium; and good adhesion to the surface to which the resin is applied.

Film-forming polyurethanes are commonly known and commercially available. As an example, the commercially available film-forming polyurethanes from BASF sold under the tradename Versamid^{®} may be mentioned.

According to a preferred embodiment of the present invention, a mixture of more than one film-forming polyurethanes may be used, for example a mixture of 2-4 different film-forming polyurethanes. Preferably, additional film-forming polyurethanes are used in a ratio of 0.5-1.5 with respect to a first film-forming polyurethane.

The film-forming polyurethane contributes to the bond strength value (BSV) of the primer composition of the present invention.

According to a preferred embodiment of the present invention, said first binder component and said film-forming polyurethane(s) together are present in an amount from 30 to 80 wt.-%, preferably 35 to 70 wt.-%, based on the weight of the entire primer composition.

According to a preferred embodiment of the present invention, said first binder component and said film-forming polyurethane(s) are present in a ratio of first binder component to film-forming polyurethane(s) of 1:1 to 1:5, more preferably 1:1.5 to 1:4.

According to a preferred embodiment of the present invention, the primer composition further comprises a water-dispersible acrylate resin. It has been found that a water-dispersible acrylate resin favourably contributes to the dispersibility and the bond strength value (BSV) of the primer composition of the present invention.

Polyacrylates are known in the art. Generally, polyacrylates are composed of acrylic acid or methacrylic acid units that are polymerised by a radical polymerisation mechanism. The acrylate resins to be used in the present invention preferably have an acid value of 50 - 100 mg KOH/g, more preferably 60 -90 mg KOH/g, and/or a hydroxyl value of 0 - 100 mg KOH/g, preferably 0 - 60 mg KOH/g.

The hydroxyl value is a known parameter that defines the number of free hydroxy groups in a chemical compound. It is also typically expressed by the amount of KOH (in mg) equivalent to the number of hydroxy groups in 1 g of the substance to be examined. It may be determined, for example, by acetylation of the free hydroxy groups of a substance with acetic anhydride. After completion of the reaction, water is added, and the remaining unreacted acetic anhydride is converted to acetic acid and measured by titration with potassium hydroxide.

Water-dispersible acrylate resins that are suitable for the primer composition of the present invention are commercially available. Examples are water-dispersible Neocryl resins from DSM.

Preferably, the primer composition of the present invention comprises 0 to 60 wt.-%, more preferably 20 to 55 wt.-%, based on the weight of the entire primer composition, of said water-dispersible acrylate resin.

According to a preferred embodiment of the present invention, the primer composition further comprises a polyamide resin. It has been found that a polyamide resin favourably contributes to the heat stability and sealing properties of the primer composition of the present invention.

Polyamides are known in the art. Generally, polyamides are composed of a dicarboxylic acid and a diamine that are polymerised by a condensation polymerisation mechanism under formation of amide groups. The polyamide resins to be used in the present invention preferably have a hydroxyl value of 0 - 30 mg KOH/g, preferably 0 - 20 mg KOH/g.

Polyamide resins that are suitable for the primer composition of the present invention are commercially available. Examples are resins sold under the trade name Flex-Rez from Lawter.

Preferably, the primer composition of the present invention comprises 0 to 10 wt.-%, more preferably 1 to 5 wt.-%, based on the weight of the entire primer composition, of said polyamide resin.

According to a preferred embodiment of the present invention, the primer composition further comprises a second binder component. Any binder components conventionally used in primer compositions may be used as additional binder component. Examples are nitrocellulose, polyesters, polyacrylates, ketonic resins, maleic resins or hard polyurethane resins. Preferably, a nitrocellulose varnish may be used. Preferably, the primer composition of the present invention comprises 10 to 50 wt.-%, more preferably 15 to 40 wt.-%, especially preferred 20 to 35 wt.-%, based on the weight of the entire primer composition, of said at least one second binder component.

According to a preferred embodiment of the present invention, the primer composition further comprises at least one additive. Said additive is preferably selected from the group consisting of an organic solvent, a plasticizer, and an anti-blocking agent.

The primer composition according to the present invention comprises at least one solvent, or may be diluted with a solvent in order to adjust the viscosity before the printing process. The solvent is an organic solvent. Any organic solvent that is conventionally used in a primer or printing inks compositions may be used. Examples are esters such as ethyl acetate, n-propyl acetate, isopropyl acetate, or neopentyl acetate, or alcohols such as ethanol, n-propanol or isopropanol. Preferably, the primer composition of the present invention comprises 5 to 50 wt.-%, more preferably 10 to 40 wt.-%, based on the weight of the entire primer composition, of said at least one solvent.

More preferably, the primer composition of the present invention is diluted with said at least one solvent in a ratio from 2:1 to 10:1, especially preferably 3:1 to 6:1.

The primer composition according to the present invention preferably comprises a plasticizer. Plasticizers are known in the art. According to the present invention, any plasticizer (monomeric or oligomeric) that is conventionally applied in printing ink layers may be used. Examples of plasticizers that are suitable as modifying component are diocytyl adipate (DOA), acetyl tributyl citrate (ATBC) or SAIB (sucrose acetate isobutyrate). Preferably, the primer composition of the present invention comprises 0 to 10 wt.-%, more preferably 0,1 to 5 wt.-%, based on the weight of the entire primer composition, of a plasticizer.

The primer composition according to the present invention preferably comprises an anti-blocking agent. Anti-blocking agents are known in the art. According to the present invention, any anti-blocking agent that is conventionally applied in printing ink layers may be used. As an example, silica (SiO₂) may be mentioned. Preferably, the primer composition of the present invention comprises 0 to 5 wt.-%, more preferably 0,1 to 3 wt.-%, based on the weight of the entire primer composition, of an anti-blocking agent.

It has been surprisingly found that a primer layer made from the above primer composition comprises, on the one hand, good overprintability, adhesion, brittleness, high bond strength values and sufficient stability (i.e. water resistance) under normal conditions of use, but on the other hand result in sufficiently quick delamination (in less than 20 minutes) and optionally deinking also on demanding substrates such as polypropylene, and to such an extent that the substrate from which the layer is released is properly pure for recycling.

The laminate (laminated product) of the present invention is characterized by the presence of a primer layer made from the primer composition described above.

According to a preferred embodiment, the laminate of the present invention comprises two substrate layers, and a primer layer applied to at least one surface of one of said substrate layers so that the primer layer is between said substrate layers, wherein said primer layer is made from a primer composition as described above.

The substrate layers of said laminate can be the same or different and any substrate such as a plastic substrate. Preferably, the substrate is a plastic substrate as conventionally used in the field of plastic laminates. Examples of suitable plastic substrates are polyethylene (PE), for example low density polyethylene (LDPE), polypropylene (PP), for example cast polypropylene (CPP), polyamide (PA) or polyethylene terephthalate (PET). These substrates may be coated with a metallization layer. For example, a substrate may be coated with a layer of a metal oxide such as aluminium oxide. An example is PP ALOX, which is a polypropylene substrate that has been coated with an aluminium oxide layer. Typically, such metallization provides for barrier properties.

According to a preferred embodiment of the present invention, at least one of said substrate layers is composed of polypropylene, preferably selected from the group consisting of oriented polypropylene (OPP) and metallized oriented polypropylene (metOPP). These are demanding substrates for delamination and/or deinking. It has been found that the primer composition of the present invention is very suitable for such substrates.

According to a preferred embodiment of the present invention, said laminate further comprises a printing ink layer on a side of said primer layer that is not in contact with one of said substrate layers.

It is also possible to provide more than one printing ink layer onto the primer layer.

The ink layer(s) applied onto the primer layer may be made from any ink conventionally used in flexible packaging applications. Such an ink can be applied on the substrate by any standard technique, preferably by flexographic or gravure printing.

According to a preferred embodiment of the present invention, said laminate may further comprise a barrier layer applied to at least one surface of one of said substrate layers to which no primer layer is applied, so that the barrier layer is between said substrate layers. Such barrier layers are known in the art. Preferably, said barrier layer is a gas impermeable or a gas resistant barrier layer. As an example, a barrier coating like an ethylene-vinylalcohol (EVOH) coating may be used for the purposes of the present invention.

Alternatively, instead of a barrier layer a further optional primer layer according to the present invention may be used for improving delamination and/or deinking performance. Either the barrier layer or the further primer layer constitute a layer that also becomes dissolved during the delamination and/or deinking treatment, so as to delaminate the respective substrate as well from other layers.

According to a preferred embodiment of the present invention, said laminate may further comprise an adhesive layer in order bind laminates formed on separate substrate layers with each other. For example, a first laminate may be formed by applying the primer composition according to the present invention onto a first substrate and then applying one or more printing ink layer onto the free surface of the applied primer layer. An adhesive layer may then be applied onto the free surface of a second substrate, and then the laminates may be combined by a conventional lamination process using a conventional lamination machine. As a result, in said embodiment the adhesive layer in the final laminate is between the second substrate layer described above and one printed layer. Adhesive layers are known in the art. For the purposes of the present invention, any adhesive layer conventionally used in laminates may be employed. As an example, polyurethanes which are used in combination with hardeners may be mentioned. Solvent-based, solvent-free and water-based polyurethanes can be used. An example of a suitable adhesive is a typical solvent-based 2K adhesive like Adcote 811A, preferably in combination with a typical hardener like 9L10 (both raw materials are commercially available from Rohm & Haas). Alternatively, lamination may be performed by extrusion lamination. This is a known process where a molten web of extruded polymer is applied as a thin coating onto a substrate which is passing continuously through a roller assembly. In extrusion lamination, the molten polymer is applied as an adhesive layer between two substrates to form a laminated structure.

According to one embodiment the present invention, first a primer layer is applied onto one surface of a substrate, and at least one printed layer is applied onto the primer layer. This allows efficient delamination and/or deinking of said substrate, by dissolving or dispersing the primer layer and thus removing the at least one printed layer that is arranged on said primer layer, from the substrate.

Thus, the present invention is also related to a method of making a laminated article as described herein, comprising the step of applying a primer composition as described herein onto a substrate.

The primer layer of the present invention can be applied onto the substrate by any conventional coating technique, preferably by flexographic or gravure printing.

Gravure and flexography are the major printing processes for printing packing materials. These processes can be used for printing a large variety of substrates, such as paper, cardboard, or plastic substrates. The gravure and flexographic printing processes are well-known. Reference may be made, for example, to Leach/Pierce (Eds.), The printing ink manual, Blueprint, London, 5^{th} ed. 1993, p, 33-53. Also the characteristics of gravure and flexographic inks are known to the skilled man. Reference may be made, for example, to Leach/Pierce (Eds.), The printing ink manual, Blueprint, London, 5^{th} ed. 1993, p, 473-598. The respective content of those chapters is incorporated herein by reference.

The primer layer is applied, according to the present invention, onto the substrate in such an amount that a coating weight of 0.2-1.5 g/m², preferably 0.4-1.3 g/m², and especially preferred 0.6-1.0 g/m² is obtained.

The ink layer(s) applied onto the primer layer may be made from any ink conventionally used in flexible packaging applications. Such an ink can be applied on the substrate by any standard technique, preferably by flexographic or gravure printing.

According to a preferred embodiment of the present invention, on one surface of the other substrate layer, to which no primer layer is applied, there is provided at least one barrier layer by methods known in the art for applying barrier layers.

The substrate layer with the applied barrier layer can be combined with a number of layers comprising another substrate layer, the primer layer of the invention applied thereto, and at least one printing layer applied on the primer layer, by an adhesive layer, as described above.

According to another preferred embodiment of the present invention, a substrate layer, to which no primer layer is applied, can be combined with a number of layers comprising another substrate layer, the primer layer of the invention applied thereto, and at least one printing layer applied on the primer layer, by an adhesive layer, as described above.

The present invention is furthermore related to an article, comprising a laminated product as described above.

According to the present invention, said article is preferably a flexible packing.

Many articles such as food articles are stored in flexible packagings, i.e. packagings which are made of a material which shows some flexibility and can thus undergo certain modifications of its shape.

Flexible packagings are widely used in areas like food packaging (e.g., retortable bags, frozen food packaging, refrigerated food packaging, shelf stable food packaging, dry goods packaging, liquid food packaging, fast food wrappers and bags), pharmaceutical packaging (e.g., primary packaging, secondary packaging, booklets and instructions), personal hygiene packaging (e.g. soap packaging, hair care packaging, baby care packaging, feminine care packaging, male care packaging), home care packaging (e.g. detergent packaging, cleaner packaging), agricultural packaging (e.g., herbicide packaging, pest control packaging, fertilizer bags), industrial packaging (e.g. shopping bags, construction wrappers and bags), and pet care packaging (e.g., pet food bags, pet medical packaging, pet hygiene packaging).

Using the primer layer of the present invention, a substrate of a laminate can be quickly and efficiently delaminated and/or deinked.

Thus, the present invention is also related to a method of delaminating and/or deinking a laminated product as described above or an article as described above, comprising a step of treating the article in an alkaline aqueous medium so as to dissolve the primer layer that is present in the laminated product or on the article.

According to the present invention, said treatment step (herein also referred to as delamination and/or deinking) involves treatment of a laminate or article comprising said laminate with an alkaline aqueous medium having a pH value from more than 7 to 13, more preferably 7.5 to 12.5, preferably at an elevated temperature of between 50 to 90°C, preferably 60 to 85°C, within a period of time in the range between 0 to 40 minutes, preferably 1 to 30 minutes, especially preferable 5 to 25 minutes, for a demanding substrate such as polypropylene, for example OPP or metOPP.

According to a preferred embodiment of the present invention, said alkaline aqueous medium comprises 0,1 to 5 wt.%, preferably 0,5 to 3 wt.-%, based on the entire weight of the aqueous medium, of a base, preferably an alkali or earth alkali hydroxide, such as sodium hydroxide (NaOH), potassium hydroxide (KOH), or lithium hydroxide (LiOH).

The alkaline aqueous medium also contains a surfactant. According to the present invention, any conventionally available surfactant may be used. Preferably, said alkaline aqueous medium comprises 0,1 to 5 wt.%, preferably 0,1 to 1 wt.-%, based on the entire weight of the aqueous medium, of a surfactant. Optionally, also a defoamer may be used in the same amounts as the surfactant.

It has been found that under those conditions delamination and/or deinking occurs within a sufficiently short time. Preferably, said step of treating the printed article is conducted for a time in the range between 0 to 40 minutes, preferably 1 to 30 minutes, especially preferable 5 to 25 minutes, for a demanding substrate such as polypropylene, for example OPP or metOPP.

The delamination and/or deinking step of the present invention can be carried out in any conventional device. Preferably, said device is equipped with a heating unit and a stirring unit.

According to a preferred embodiment of the present invention, the laminate or article comprising said laminate to be delaminated and/or deinked is comminuted into smaller pieces before deinking is carried out. It has been found that smaller pieces can be delaminated and/or deinked more rapidly than larger pieces. The suitable size of the pieces to be delaminated and/or deinked depends on the nature of the laminate or article and can be easily optimised by a skilled person.

After a preferred embodiment where delamination and deinking is conducted, the substrate of the printed article of the present invention is substantially devoid of printing ink, i.e. there should not be any observable remaining printing ink on the substrate. Accordingly, the substrate that has been delaminated and deinked according to this preferred embodiment of the present invention can be readily recycled by any conventional recycling method in the art, e.g. melt extrusion.

According to a preferred embodiment of the present invention, also the printing ink that has been removed from the substrate during the deinking step according to the present invention can be recycled and reused, for example by separation from the delamination and/or deinking medium and subsequent separation of the pigment(s), e.g. by treatment with suitable solvents and centrifugation. Methods for separating pigments from a printing ink composition are known in the art.

Thus, the present invention is also related to the use of a primer composition as described above for the manufacture of a laminated product as described above that can be delaminated and/or deinked by treatment with an aqueous medium.

The present invention will now be described below in more detail by reference to non-limiting figures and examples.
- Fig. 1: shows an illustration of a laminated product according to an embodiment of the present invention.
- Figs. 2a-c: show an embodiment of the delamination and/or deinking process of the present invention.
- Fig. 3a: shows an example of a laminated product according to a comparative example during the delamination and/or deinking process.
- Fig. 3b: shows an example of a laminated product according to a first embodiment of the present invention during the delamination and/or deinking process.
- Fig. 3c: shows an example of a laminated product according to a second embodiment of the present invention during the delamination and/or deinking process.

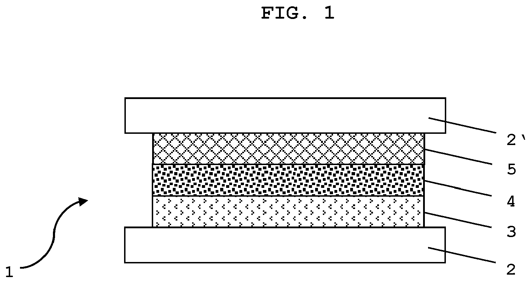

In Fig. 1 a laminated product 1 according to an embodiment of the present invention is shown. The laminated product 1 comprises a first substrate 2, made from a demanding plastic substrate such as OPP, and a second substrate 2', made from a demanding plastic substrate such as metOPP. The first substrate 2 and the second substrate 2' may be of the same or a different material.

On one surface of said substrate 2, there is applied a primer layer 3 according to the present invention. On one surface of said primer layer 3 that is remote from the substrate 2, there is provided a printing ink layer 4.

One surface of said other substrate 2' is combined with the stack of substrate 2, primer layer 3 and printing layer 4 via an adhesive layer 5.

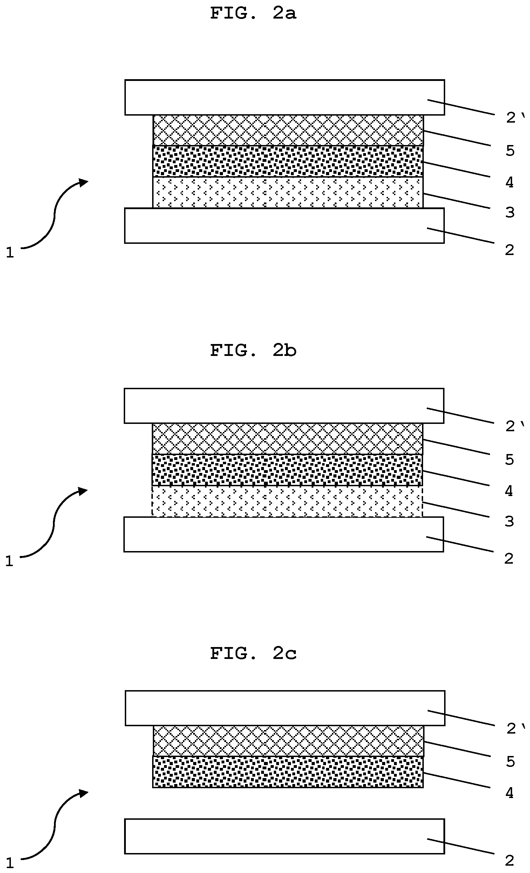

In Figs 2a to 2c, the delamination and/or deinking process of the present invention is schematically illustrated. Same reference numbers designate same components as in Fig. 1. In Fig. 2a, as an example a laminated product 1 according to the embodiment of Fig. 1 is shown.

In Fig. 2a, the laminated product 1 before delamination and/or deinking is shown. In Fig. 2b, it is shown that during the delamination and/or deinking step the primer layer 3 becomes dissolved (as illustrated by the dotted boundaries). In Fig. 2c, it is shown that after the delamination and/or deinking step the substrate 2 is separated from the printing ink layer 4 and adhesive layer 5 and the substrates 2', and can be recycled separately.

### Example 1: Preparation of a first primer composition

The following components were added together under stirring, so as to result in a primer composition according to the present invention:

| **Component** | **Weight-%** |
|---|---|
| Nitrocelullose | 24 |
| Maleic or fumaric modified rosin resin | 15 |
| Film-forming polyurethane | 55 |
| Polyamide resin | 3 |
| Plasticizer | 2 |
| Anti-blocking agent | 1 |

The thus obtained composition was diluted with a mixture of organic solvents in a ratio of 5:1.

### Example 2: Preparation of a second primer composition

The following components were added together under stirring, so as to result in a primer composition according to the present invention:

| **Component** | **Weight-%** |
|---|---|
| Nitrocelullose | 25 |
| Maleic or fumaric modified rosin resin | 15 |
| Film-forming polyurethane | 24 |
| Water-dispersible acrylate resin | 33 |
| Plasticizer | 2 |
| Anti-blocking agent | 1 |

The thus obtained composition was diluted with a mixture of organic solvents in a ratio of 5:1.

### Comparative example 1: Preparation of a primer composition according to EP-3 932 642 A1

The following components were added together under stirring, so as to result in a primer composition according to the present invention:

| **Component** | **Weight-%** |
|---|---|
| Nitrocelullose | 80,2 |
| PVA varnish | 17, 9 |
| Soft resin | 1,5 |
| Plasticizer | 0,4 |

The soft resin was a polyurethane resin (with Tg < 20°C, MW < 20.000 g/mol and not film forming) in ethyl acetate. The PVA (polyvinyl acetate) varnish was a copolymer of vinyl acetate and crotonic acid.

The thus obtained composition was diluted with a mixture of organic solvents in a ratio of 5:1.

### Example 3: Preparation of laminated product

The deinking primer compositions of examples 1 to 2 and comparative example 1 were each applied onto the substrates indicated in the table 1 below. As printing inks, color and white inks (typical flexible packing lamination inks) were used.

The primer composition was printed on film 1. A gravure Testacolor BTM-190 lab printing machine was used for all printing steps.

On top of the thus applied primer layer on film 1, an ink was applied, using also a gravure Testacolor BTM-190 lab printing machine.

For lamination of the printed films 1 and 2 to prepare duplex laminates, first 8 parts of a typical hardener (like 9L10) was added to a typical solvent-based 2K adhesive (like Adcote 811H; both raw materials supplied Rohm and Haas), followed by using a Labo Combi 400 lamination machine to apply the adhesive on film 2 and laminate it against film 1.

To ensure high bond strength values of the laminate and a proper through hardening, the laminate was stored at 40°C and 10 bar pressure for a period of at least 5 days before measuring the bond strength values with an Instron 5544 device. Required bond strength values were amongst others depending on the specific film used, but were in general higher than 1.5N/15mm and met application requirements.

### Example 4: Delamination and Deinking

Following the APR Critical Issues Guidance Document for Sleeve Label Inks and PET Substrate Bottles test method, an alkaline aqueous medium was prepared by combining 98,75 wt.-% water, 5 wt.-% NaOH and 0,25 wt.-% of a surfactant ( Polycirq P2).

200 ml of said alkaline aqueous medium were heated to 65°C or 85°C, 0,8 g of the laminated products of example 3 were cut into pieces (about 20x20 mm), put into the caustic solution and stirred. After the indicated time int able 1, the solution was filtered, and the treated cut pieces were washed with water. During the test, samples had been taken after every minute and inspected whether delamination and deinking had been taken place. The time required for delamination and the subsequent deinking (including the delamination time and therefore the deinking time is equivalent to the total process time) were recorded.

**Table 1**

| Primer example | Film 1 | Film 2 | Bond strength value unsealed [N/15mm] | Bond strength value sealed [N/15mm] | Delamination/ Deinking time (min) |
|---|---|---|---|---|---|
| 1 | OPP | metOPP | 1.3 | 1.4 | 25 |
| 2 | OPP | metOPP | 2.5 | 0.9 | 30 |
| C1 | OPP | metOPP | 0.1 | 0.1 | -* |

| | | | | | |
|---|---|---|---|---|---|
| *: no Delaminaton and deinking after 35 min | | | | | |

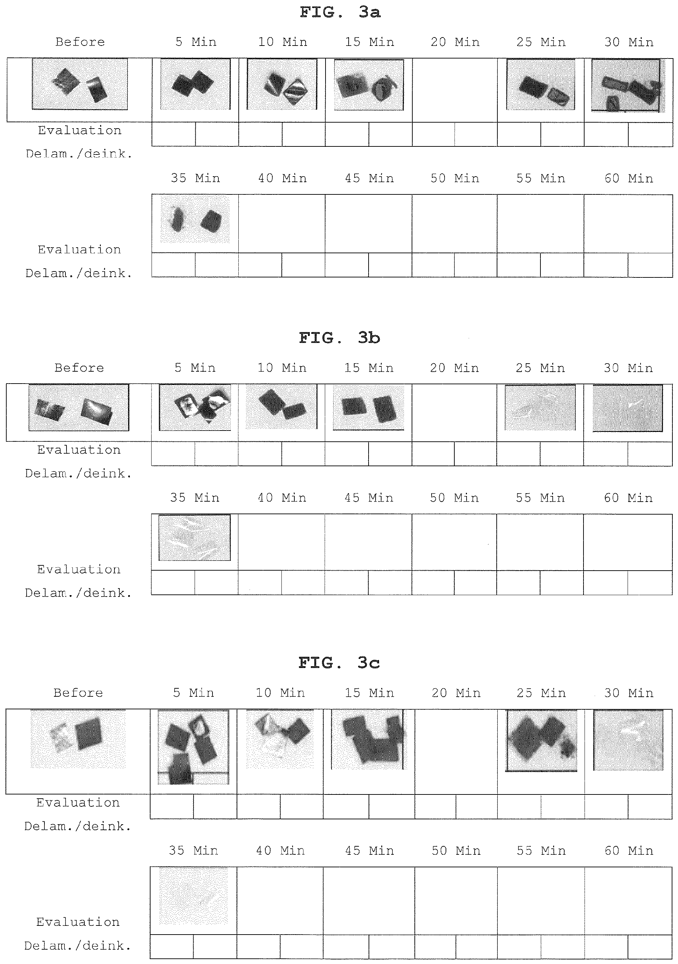

As can be seen in Fig. 3a, under conditions of 85°C for 35 min no delamination and deinking of the substrates was achieved with the laminated product of example 3 using the primer composition of comparative example 1.

On the other hand, as can be seen in Fig. 3b, under conditions of 85°C for 25 min complete delamination and deinking of the substrates was achieved with the laminated product of example 3 using the primer composition of example 1.

Moreover, as can be seen in Fig. 3c, under conditions of 85°C for 30 min complete delamination and deinking of the substrates was achieved with the laminated product of example 3 using the primer composition of example 2.

Also, in the examples using the primer composition according to the invention, much higher bond strength values were obtained as compared to the example using the primer composition according to comparative example 1.

### Example 5

The deinking primer composition of example 2 was applied onto a film of MDOPE/EVOH/PE as substrate. As printing inks, color and white inks (typical flexible packing lamination inks) were used.

The primer composition was printed on the film. A gravure Testacolor BTM-190 lab printing machine was used for all printing steps.

On top of the thus applied primer layer on film, the inks were sequentially applied, using also a gravure Testacolor BTM-190 lab printing machine.

On top of the ink layers, a conventional overprint varnish was applied.

Deinking was carried out as described in example 4. Deinking occurred within less than 10 min.

### Comparative example 5

Example 5 was repeated, but without using the primer composition of example 2 (i.e. the ink layers were printed directly onto the film).

Deinking was carried out as described in example 4. After 30 min, only partial deinking had been achieved.

It can be seen that when using a primer composition according to the present invention, deinking of surface printed products is significantly enhanced.

### Example 6: Preparation of an extrusion-laminated product

The deinking primer compositions of example 2 was applied onto an OPP film as substrate. As printing inks, color and white inks (typical flexible packing lamination inks) were used.

The primer composition was printed on the OPP substrate. A gravure Testacolor BTM-190 lab printing machine was used for all printing steps.

On top of the thus applied primer layer on the OPP substrate, an ink was applied, using also a gravure Testacolor BTM-190 lab printing machine.

For lamination of the printed OPP substrate and a metOPP film as second substrate, to prepare duplex laminates, a molten PE film was applied as an adhesive layer between the printed OPP substrate and the metOPP film, in a conventional extrusion lamination machine.

To ensure high bond strength values of the laminate and a proper through hardening, the laminate was stored at 40°C and 10 bar pressure for a period of at least 5 days before measuring the bond strength values with an Instron 5544 device. Required bond strength values were amongst others depending on the specific film used, but were in general higher than 1 N/15mm and met application requirements.

Delamination and deinking were performed as in example 4. Under conditions of 85°C for 30 min complete delamination and deinking of the substrates was achieved.

## Claims

1. A primer composition for delaminating and/or deinking of a substrate (2, 2'), wherein said primer composition is solvent-based and comprises as a first binder component a modified rosin resin selected from the group consisting of maleic-modified an fumarate-modified rosin resin having an acid value in the range from 50 to 300 mg KOH/g and being dispersible in an alkaline medium, and a film-forming polyurethane.

2. The primer composition according to claim 1, **characterized in that** the composition further comprises a water-dispersible acrylate resin.

3. The primer composition according to claim 1 or 2, **characterized in that** the composition further comprises a polyamide resin.

4. The primer composition according to any one of claims 1 to 3, **characterized in that** the composition further comprises a second binder component, preferably a nitrocellulose varnish.

5. The primer composition according to any one of claims 1 to 4, **characterized in that** the composition further comprises at least one additive selected from the group consisting of an organic solvent, a plasticizer, and an anti-blocking agent.

6. Laminated product (1) comprising two substrate layers (2, 2'), and a primer layer (3) applied to at least one surface of one of said substrate layers (2) so that the primer layer (3) is between said substrate layers (2, 2'), wherein said primer layer (3) is made from a primer composition according to any of claims 1 to 5.

7. Laminated product (1) according to claim 6, further comprising a printing ink layer (4) on a side of said primer layer (3) that is not in contact with one of said substrate layers (2, 2').

8. Laminated product (1) according to any of claims 6 to 7, further comprising an adhesive layer (5) applied to at least one surface of one of said substrate layers (2) which is different from the surface to which said primer layer (3) is applied, wherein said adhesive layer (5) is between said substrate layers (2, 2').

9. Laminated product (1) according to any of claims 6 to 8, **characterized in that** at least one of said substrate layers (2, 2') is composed of polypropylene, preferably selected from the group consisting of oriented polypropylene and metallized oriented polypropylene.

10. Product, comprising a substrate layer (2, 2'), and a primer layer (3) applied to at least one surface of said substrate layer (2), wherein said primer layer (3) is made from a primer composition according to any of claims 1 to 5.

11. Product according to claim 10, further comprising a printing ink layer (4) on a side of said primer layer (3) that is not in contact with one of said substrate layer (2), and optionally an overprint varnish on a free side of said printing ink layer (4).

12. Article, preferably a flexible packing, comprising a laminated product (1) according to any of claims 6 to 9.

13. Method of delaminating and/or deinking a laminated product (1) according to any of claims 6 to 9, a product according to claim 10 or 11, or an article according to claim 12, comprising a step of treating the laminated product (1), product or article in an alkaline aqueous medium so as to dissolve the primer layer (3) that is present in the laminated product (1) or on the article.

14. The method according to claim 13, **characterized in that** said alkaline aqueous medium comprises 0,1 to 5 wt.%, preferably 0,5 to 3 wt.-%, based on the entire weight of the aqueous medium, of a base, preferably an alkali or earth alkali hydroxide, such as sodium hydroxide, and a surfactant.

15. The method according to claim 13 or 14, **characterized in that** in said step of treating the laminated product (1) or said article said aqueous medium is heated to a temperature in the range from 50 to 90°C, preferably 60 to 85°C, preferably for a time in the range between 1 to 10 min, preferably 2 to 6 min.
